# EUROPEAN PATENT APPLICATION

(11) **EP 3 033 948 A1**
(43) Date of publication of application: **22.06.2016**
(21) Application number: 14198892.3
(22) Date of filing: 18.12.2014
(51) Int. Cl.: A23L 3/01, A23L 3/00, A23L 3/02, A23L 3/10, B65D 81/34

(54) **Method and device for cooking and/or pasteurization of foodstuff**

(71) Applicant: MicVac AB, 431 37 Mölndal (SE)
(72) Inventor: Gustavsson, Martin, AD700 Escaldes-Engordany (AD); Pettersson, Håkan, SE-181 63 Lidingö (SE); Rüdel, Hanna, SE-434 92 Vallda (SE)
(74) Representative: Awapatent AB

(57) **Abstract**

The present invention relates to a method of cooking and/or pasteurizing foodstuff in a container, the method comprising the following steps, providing a sealed container comprising foodstuff, placing said sealed container in a cooking unit, cooking and/or pasteurizing said foodstuff by applying heat or microwaves to said sealed container, wherein an external force is provided to said sealed container during at least a part of the step of cooking and/or pasteurizing said foodstuff in order to limit expansion of said sealed container.

The present invention also relates to a deformation control device, a kit comprising a deformation control device and a container, as well as the use of a deformation control device in a method of cooking and/or pasteurizing foodstuff in a container.

## Description

### Field of the invention

The present invention relates to a method of cooking and/or pasteurizing foodstuff in a flexible, semi rigid or rigid container.

The present invention also relates to a deformation control device, a kit comprising a deformation control device and the use of a deformation control device.

### Background of the invention

Today more and more ready-to-eat food is sold in grocery stores. Such meals are either frozen or refrigerated in order to have a reasonable long shelf life. Frozen food may be regarded as less tasty and looking less appetizing, while refrigerated food may be stored for a shorter period of time before being eaten. In order to prolong the shelf life for such refrigerated ready-to-eat food pasteurisation is used. Pasteurisation is combined with a removal of oxygen from the interior of the package in order to minimise bacterial growth. Such removal of oxygen may be either of creating a slight vacuum or the replacement of the oxygen by some other suitable gas.

In a cooking and pasteurisation method used by the applicant the food is placed in a plastic tray and is provided with a plastic cover in the form of a see-through thin film which is sealed along the tray edges to create an interior which is completely sealed off from the surroundings. In this plastic film a valve is created which may be automatically opened when an overpressure occurs within the package. Such overpressures are e.g. created when the package is positioned in a microwave oven and the food is cooked by exposing it to electromagnetic radiation. It may also be created through convection in e.g. furnaces with air heating and potentially steam, or by exposing the package to thermal radiation, e.g. through infra-red radiation. When the food is cooked or pasteurized, a large amount of steam is created. The steam is building up an overpressure such that the valve is opening and letting both oxygen and steam out. When the food is cooked the cooking unit is shut off, whereby the steam production instantaneously stops. The valve is then designed to close immediately due to the reduction of internal overpressure and the lowering of the ambient temperatures. The food packages are cooled to a suitable storing temperature and may be delivered to retailers for later use. The overpressure of the kind when the valve opens in such food packages is quite high, in the region of 100 hPa, in comparison to i.a. a valve used in connection with packages such as for coffee, in which the overpressure is just slightly above atmosphere pressure. The closure of the valve after cooking is important in order to seal the interior of the package and food from ambient air and contaminating substances.

If the valve does not open when the pressure has reached a certain level, there is a risk that the food packages may be expanded, with the risk that it may be damaged or receive fractural indications, which may cause fractures later on. However, if the valve is designed to open at a too low pressure, there is a risk that it will not seal the interior of the package from ambient air and contaminating substances sufficiently well.

Hence, there is a need for an improvement with regard to the provision of methods and devices to be used in cooking and/or pasteurizing of food so that the interior of a food container is sufficiently sealed from the environment while at the same time the risk that the food container is damaged during cooking and/or pasteurization is avoided.

### Summary of the invention

The present invention solves the above-identified and other problems by a method of cooking in which an external force is applied on the container comprising the foodstuff during at least a part of the time the foodstuff is being cooked and/or pasteurized. By applying an external force to the container, deformation of the container is prevented. Furthermore, the present invention also provides a deformation control device that may be used to apply an external force to a container positioned in the deformation control device.

According to at least a first aspect of the present invention, a method of cooking and/or pasteurizing foodstuff in a container is provided. The method comprises the following steps:
- providing a sealed container comprising foodstuff,
- placing said sealed container in a cooking unit,
- cooking and/or pasteurizing said foodstuff by applying heat or microwaves to said sealed container, wherein an external force is provided to said sealed container during at least a part of the step of cooking and/or pasteurizing said foodstuff in order to limit expansion of said sealed container.

By applying an external pressure to the container, it cannot deform unrestrictedly by expansion and damages or indication of fractures is thereby avoided during the time the pressure is building up inside the container and before the valve opens, in case the container is provided with a valve.

The method according to the present invention may also be used for a container not having a valve. In that case, the external force will prevent the container from unrestricted deformation by expansion the entire time from the pressure is being built up inside the container until the foodstuff has been cooled down and the pressure inside the container once again has been lowered. This may be especially relevant for containers made of certain materials. Examples of such materials are Polypropylene and laminates thereof and semi/crystalline Polyethylene Thereftalate. The benefit of the present invention is however not limited only to the mentioned materials, it will be useful also for packages of other materials.

The external force need not be applied to the container during the entire cooking and/or pasteurization, it is sufficient that it is applied during the time the container may otherwise expand to a degree at which it risks being permanently deformed.

According to an exemplary embodiment, the external force is applied to the upper side of said container during at least a part of the time said foodstuff is being cooked and/or pasteurized.

The container is usually positioned on a tray or conveyor belt during cooking or pasteurization. If the external force applied to the container is provided to the upper side of the container, the container will be held in place on the tray or conveyor belt and will experience none or in some cases only limited expansion in the direction upwards or downwards.

According to an exemplary embodiment, the external force is applied to at least four sides of said container during at least a part of the time said foodstuff is being cooked and/or pasteurized.

By applying the external force to at least four sides of the container, the container will experience none or in some cases only limited expansion in any one of these four directions.

According to an exemplary embodiment, an external force is applied to the upper and lower sides of the container, as well as on two opposite sides, being either the long or short sides, of the container.

According to an exemplary embodiment, said external force is applied by a deformation control device. The external force may e.g. by provided by a device being provided at least above the container when it is placed in the cooking unit. The device may either be in contact with the container during the entire cooking step, or have a small gap to the container before the cooking starts. If a small gap is provided, the container will come into contact with the deformation control device once the container has expanded slightly. Further expansion is thereby prevented.

According to an exemplary embodiment, said step of cooking and/or pasteurizing comprises exposing said foodstuff to at least 70°C for at least 7 minutes.

According to an exemplary embodiment, said container is made of a rigid or semi rigid material. Definitions of rigid or semi rigid material are known to people skilled in the field.

The present method of cooking and/or pasteurizing is beneficial to use for containers of rigid or semi rigid material as they are susceptible to damages or fracture indications if they are subject to expansion during cooking and/or pasteurization.

According to an exemplary embodiment, said container has a generally rectangular outline.

According to an exemplary embodiment, said container is made of a flexible material. A definition of a flexible material is known to persons skilled in the art.

According to an exemplary embodiment, said container is in the form of a pouch.

Even if containers of flexible material, for example containers in the form of a flexible pouch, are not as likely to be damaged if they are subject to expansion during cooking and/or pasteurization, the method according to the present invention is still beneficial to use when the foodstuffs is contained in such a container, as also they, depending on the material of the container, may be sensitive to damages. A second advantage of the present invention in this case resides in the fact that the cooking unit may be more efficiently utilized if the containers are not allowed to expand. This advantage is also present when using rigid or semi rigid containers.

According to any exemplary embodiment, the container is provided with a valve.

The method according to the present invention is suitable to be used together with a container comprising a valve through which air in the container may escape during heating. However, it is also conceivable to use the method according to the present invention together with a container not having a valve.

According to a second aspect of the present invention, a deformation control device to be used in a method of cooking and/or pasteurizing foodstuff in a container is provided. Said deformation control device comprises two oppositely positioned walls and a roof portion, wherein said oppositely positioned outer walls and roof portion together define a space for positioning of a container comprising foodstuff.

According to this second aspect of the present invention, a device is provided which is adapted to receive at least a part of a container for foodstuff such that the device becomes positioned on at least three sides of said container. By that, the device will be able to provide an external force to the container, which prevents or limits the container from expanding during cooking. Damages or indication of fractures is thereby avoided during the time the pressure is building up inside the container and before the valve opens, in case the container is provided with a valve. The device according to the present invention may also be used for a container not having a valve. In that case, the external force will prevent the container from deforming by expansion the entire time from the pressure is being built up inside the container until the foodstuff has been cooled down and the pressure inside the container once again has been lowered.

The external force need not be applied to the container during the entire cooking and/or pasteurization, it is sufficient that it is applied during the time the container may otherwise expand to a degree at which it risks being permanently deformed. Hence, it is possible that a small gap is present between the deformation control device and one or several of the sides of the container, before the cooking and/or pasteurization have begun. In that case, expansion will not be entirely prevented, only limited.

According to an exemplary embodiment, the deformation control device, potentially together with a further device such as a tray, provides an external force to at least four sides of a container being positioned in the deformation control device.

According to an exemplary embodiment, the roof portion of said deformation control device is provided with at least one aperture.

It may be beneficial to provide the roof portion of said deformation control device with an aperture. The valve of the container may then be aligned with the at least one aperture so that the valve is not prevented from opening when the pressure has been built up in the container.

According to an exemplary embodiment, said aperture extends over at least 50% of the surface of said roof portion.

According to an exemplary embodiment, said aperture extends over at least 75% of the surface of said roof portion.

According to an exemplary embodiment, said aperture extends over at least 90% of the surface of said roof portion.

By the term that the aperture extends over at least a certain percentage of the roof portion is meant to understand that at least the stated percentage of material is removed from the roof portion in order to create the aperture.

According to another exemplary embodiment, the roof portion of said deformation control device is not provided with any aperture. A device according to this embodiment is preferably used together with a container in which no valve is provided or with a container in which the valve is positioned such that it does not become positioned beneath the roof of the deformation control device when the container is placed in said deformation control device.

According to an exemplary embodiment, at least an edge of the roof portion of said deformation control device is bent downwards.

By bending at least one, and possibly two, edges of the roof portion downwards, at least two benefits are provided. A first one is that the container may become more securely positioned in the deformation control device. The other one is that also the sides of the container that are in contact with the bent down edges will be prevented from expanding. Hence, an even better deformation control is provided. It is preferably one or both of the edges of the roof that are not adjacent the side walls of the deformation control device that are bent downwards.

According to an exemplary embodiment, the length of said deformation control device is 150 to 600 mm, more preferably 300 to 350 mm and most preferably 325 mm and the width of the deformation control device is 120 to 350 mm, more preferably 250 to 330 mm and most preferably 270 mm.

Distances within these ranges are beneficial in terms of providing a deformation control device that is suitable to use with containers adapted for holding foodstuff.

According to an exemplary embodiment, said deformation control device is made of a metallic, inorganic or plastic material.

According to an exemplary embodiment, said deformation control device is made of metal or inorganic material such as glass or ceramics.

According to an exemplary embodiment, said deformation control device is made of aluminium or stainless steel. A benefit of using these materials is that they are suitable for food industry applications, do not corrode easily in wet conditions and can be washed.

According to an exemplary embodiment, said deformation control device is made of a thermoplastic material having a glass transition temperature higher than 100° C, preferably higher than 120° C. A benefit of using a material having a glass transition temperature higher than 100° C, preferably higher than 120° C is that it is possible to subject it to the temperatures of the cooking unit.

According to an exemplary embodiment, said deformation control device is reinforced with fibres such as glass or carbon fibre. Glass and carbon fibre material are commonly used in composite materials.

According to an exemplary embodiment, said thermoplastic material is chosen from Polymethacrylate, Polymethylmethacrylate, Polystyrene, Polycarbonate, Polyurethane, Polyethylene naphtalate, ABS, HIPS, or PTFE. A benefit of using these materials is that they are common and used in the industry and readily available off the shelf. They also fulfil the property requirements of the deformation control device in terms of e.g. glass transition temperatures and stability.

According to an exemplary embodiment, said deformation control device is made of cross linked polymers having a glass transition temperature higher than 100° C, preferably higher than 120° C. A benefit of using a material having a glass transition temperature higher than 100° C, preferably higher than 120° C is that it is possible to subject it to the temperatures of the cooking unit.

According to an exemplary embodiment, said deformation control device is reinforced with fibres such as glass or carbon fibre. Glass and carbon fibre material are commonly used in composite materials.

According to an exemplary embodiment, said deformation control device has solid walls and roof portion, with at least one aperture being provided in the roof portion.

According to an exemplary embodiment, said deformation control device is made of lattice.

The deformation control device should preferably obstruct the heat transfer to the container as little as possible and that may be achieved by using as little material as possible in the deformation control device. As it at the same time is important to provide a force to a sufficiently large area of the container, a deformation control device made of lattice may be beneficial.

According to an exemplary embodiment, said deformation control device is made of a microwave transparent material. A benefit of using a microwave transparent material is that it can be used not only in conventional ovens, but also in microwave ovens.

According to an exemplary embodiment, said microwave transparent material is crystalline, semi crystalline or amorphous.

According to an exemplary embodiment said deformation control device is a sleeve.

Said sleeve may be provided with at least three sides, e.g. a roof portion and two opposite side walls. By that it may be able to exert an external force to at least three sides of a container. If the sleeve is positioned on a tray or a conveyor belt, it will together with the surface it is positioned on, be able to exert an external force to at least four sides of a container.

It is also conceivable with a sleeve having at least four sides, e.g. a roof portion, two opposite side walls and a bottom portion, thereby being able to exert an external force to at least four sides of a container even without the need of being placed on an interacting surface.

According to an exemplary embodiment, said deformation control device is a sleeve that is permanently affixed to a tray.

According to an exemplary embodiment, said deformation control device is permanently affixed to the upper side of a tray.

According to an exemplary embodiment, said deformation control device is permanently affixed to the lower side of a tray. In this embodiment, the tray may form the roof portion of the deformation control device. If the tray forms the roof portion of the deformation control device, it may be suitable to provide at least one aperture in the tray such that a container may be positioned in such a manner in the deformation control device that a valve of the container may open once a sufficient pressure has been built up in the container.

According to an exemplary embodiment, said side walls of the deformation control device do not need to extend over the entire height of the sides of the container. It is for example conceivable with providing side walls extending from the lower side of a tray, which does not extend the entire way to the tray positioned below. In use, a container may then be placed on a tray, have free space at a portion of each of its side walls until it comes into contact with the respective side walls extending from the tray above. The tray positioned above will then constitute the roof of the deformation control device.

According to a third aspect of the present invention, a kit comprising a deformation control device according to the second aspect of the present invention and a container for comprising foodstuff is provided.

According to an exemplary embodiment, said container is made of a rigid or semi rigid material.

A deformation control device according to the second aspect of the present invention is beneficial to use together with containers of rigid or semi rigid material as they are susceptible to damages or fracture indications if they are subject to expansion during cooking and/or pasteurization.

According to an exemplary embodiment, said container has a generally rectangular outline.

According to an exemplary embodiment, said container is made of a flexible material.

According to an exemplary embodiment, said container is in the form of a pouch.

Even if containers of flexible material, for example containers in the form of a flexible pouch, are not as likely to be damaged if they are subject to expansion during cooking and/or pasteurization, the deformation control device according to the second aspect is still beneficial to use when the foodstuffs is contained in such a container, as also containers of flexible material, depending on the material of the container, may be sensitive to damages. A second advantage of the present invention is this case resides in the fact that the cooking unit may be more efficiently utilized if the containers are not allowed to expand. This advantage is also present when using rigid or semi rigid containers.

According to any exemplary embodiment, the container is provided with a valve.

The method according to the present invention is suitable to be used together with a container comprising a valve through which air in the container may escape during heating. However, it is also conceivable to use the method according to the present invention together with a container not having a valve.

According to a fourth aspect of the present invention, the deformation control device according to the second aspect of the present invention may be used in a method according to the first aspect of the present invention.

### Brief description of the drawings

The above, as well as additional, objects, features and advantages of the present invention will be better understood through the following illustrative and non-limiting detailed description of exemplary embodiments of the present invention, with reference to the appended drawings, wherein:
Fig. 1 illustrates a first embodiment of a deformation control device according to the present invention in perspective view,
Fig. 2 illustrates a second embodiment of a deformation control device according to the present invention in perspective view,
Fig. 3 illustrates a third embodiment of a deformation control device according to the present invention in perspective view,
Fig. 4 illustrates a fourth embodiment of a deformation control device according to the present invention in perspective view,
Fig. 5 illustrates a fifth embodiment of a deformation control device according to the present invention in perspective view,
Fig. 6 illustrates a sixth embodiment of a deformation control device according to the present invention in perspective view, and
Figs. 7a and 7b illustrates the same embodiment of the deformation control device as illustrated in Fig. 3, but with two and four containers placed therein, respectively.

### Detailed description of exemplary embodiments

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout the description.

In the following description, the present invention is described with reference to a food container having a plastic lower portion covered with a plastic film on which a valve is arranged. It is however to be understood that any package able to contain food may be used, such as a plastic bag. The materials of the food package are also exchangeable as long as the characteristics and behaviour is maintained as described.

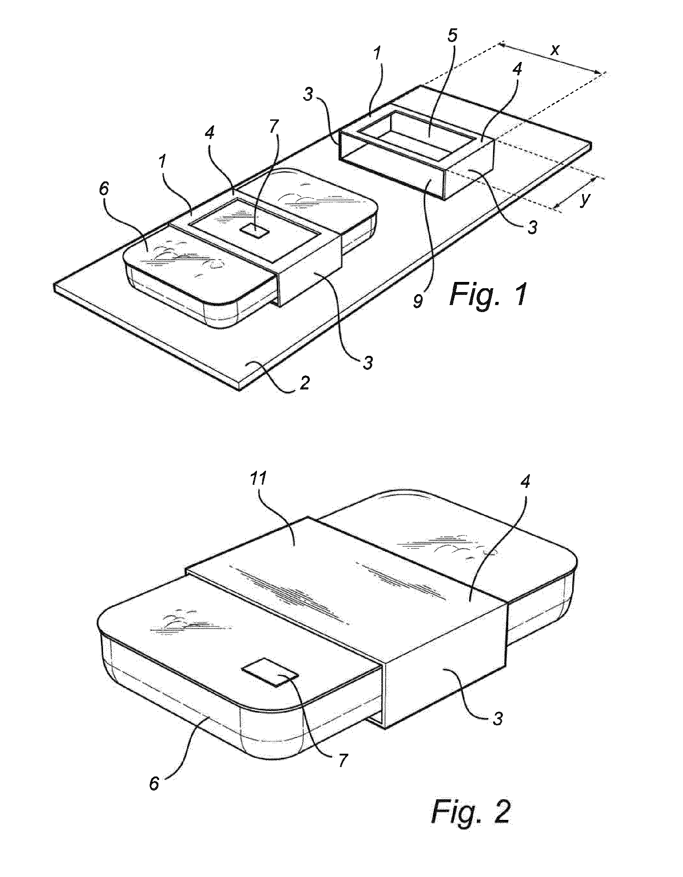

Now turning to Fig. 1, which illustrates a first embodiment of the deformation control devices according to the present invention. In Fig. 1, two deformation control devices 1 are disclosed on a tray 2. The tray 2 is of a conventional metallic type being used in ovens. The deformation control devices 1 may, but need not, be permanently fixed to the tray 2, by e.g. welding. It is however also conceivable with separate deformation control devices 1 that are placed on the tray 2 when they are needed.

Each of the deformation control devices 2 comprises two opposite side walls 3 and a roof portion 4. In this embodiment, the roof portion 4 is provided with an aperture 5. The deformation control devices 2 may also comprise a bottom 9 (as illustrated). It is however also conceivable that the tray 2 forms the bottom portion.

As is illustrated in the left hand deformation control device 1 in this embodiment, a container 6 comprising foodstuff may be positioned on the tray 2 and in the deformation control device 1. When the container is positioned in the deformation control device 1, a valve 7 positioned at the upper portion of the container 6 is positioned beneath the aperture 5 of the deformation control device 1. By this, the valve 7 is not obstructed from being opened.

As can be seen in the figure, the length of the deformation control device 1 does not extend over the entire length of the container 6. By this, the heat transfer to the container 6 during cooking and/or pasteurization is obstructed to a sufficiently low degree, while at the same time the container 6 is limited in its expansion possibilities.

In use, when the foodstuff provided in the container 6 should be cooked and/or pasteurized, the container 6 is positioned on the tray 2 in the deformation control device 1 in a cooking unit (not shown). The cooking unit may e.g. be a microwave tunnel or oven, convection tunnel or oven, autoclave or a steam tunnel or oven. When the foodstuff is heated, an overpressure is created in the container 6. The deformation control unit 1 applies an external force on the container 6, thereby preventing it from expanding. The deformation control unit according to this embodiment should be able to prevent the container 6 from expanding when it has an internal pressure of over 30 mbar at a temperature higher than 70°C, for a time period of at least seven minutes and up to four hours. The valve 7 opens once a sufficiently high pressure has been built up and air is allowed to escape through the valve. Once the foodstuff is cooked and/or pasteurized, the heat source is turned off and upon cooling, the valve 7 closes and a vacuum is created in the container 6.

Another embodiment of the present invention is illustrated in Fig. 2. In this embodiment, a deformation control device 11 is illustrated. Similar to the deformation control device 1, it comprises opposite side walls 3 and a roof 4. Also, similar to the previous embodiment, the side walls 3 do not extend the entire length of the sides of the container. However, in this embodiment, the roof 4 is not provided with an aperture. Instead, this embodiment is suitable to use with containers 6 on which the valves 7 are provided at a position that is not covered by the deformation control device 11 when it is being used.

The deformation control device 11 is used in the same manner as described above for the deformation control device 1.

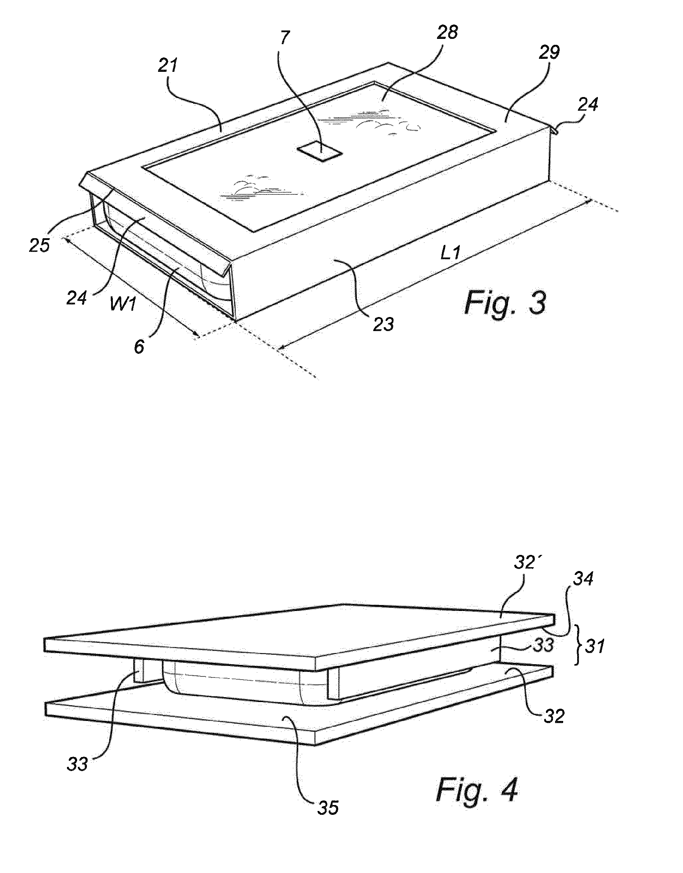

Yet another embodiment of the present invention is illustrated in Fig. 3. In this embodiment the length of the side walls 23 extend over the entire length of the container 6. Furthermore, the edges 24 of the short sides 25 of the deformation control device 21 are bent downwards. The length of the bent edge is approximately 2 mm. By the provision of this bent edge, the container 6 will be better held in place in the deformation control device. Also, when a pressure is being built up inside the container, the bent edges will provide an external force against the short sides of the container; thereby preventing deformation also of the short sides of the container.

The aperture 28 of the roof portion 29 is much larger in this embodiment than in the embodiment disclosed in Fig. 1. The reason for this is to not obstruct the heat transfer more than necessary or in other words, compensate for the fact that the sides of the container 6 is covered by side walls 23 in this embodiment.

Also the deformation control device 21 functions in a manner similar to the deformation control devices 1 and 11 of the two previous embodiments.

Yet another exemplary embodiment is illustrated in Fig. 4. In this embodiment, the deformation control device 31 is formed by a conventional metallic tray 32, 32' used in ovens that has been provided with two side walls 33. The two side walls 33 are fixedly attached, e.g. by welding, to the lower side 34 of the tray 32' in the illustrated embodiment.

When the deformation control device 31 is to be used, a container 6 is provided at the upper side 35 of a first tray 32, and thereby becomes positioned below the two side walls 33 extending downwards from the tray 32'.

As can be seen in Fig. 4, the side walls 33 do not need to extend all the way to the first tray 32, it is sufficient that they can apply an external force to at least a part of the container 6.

Also this embodiment functions in the same manner as described for the previous embodiments. During use, external forces preventing the container 6 from expanding are applied by the lower side of the second tray 32', the upper side of the first tray 32 and the inner sides of the side walls 33.

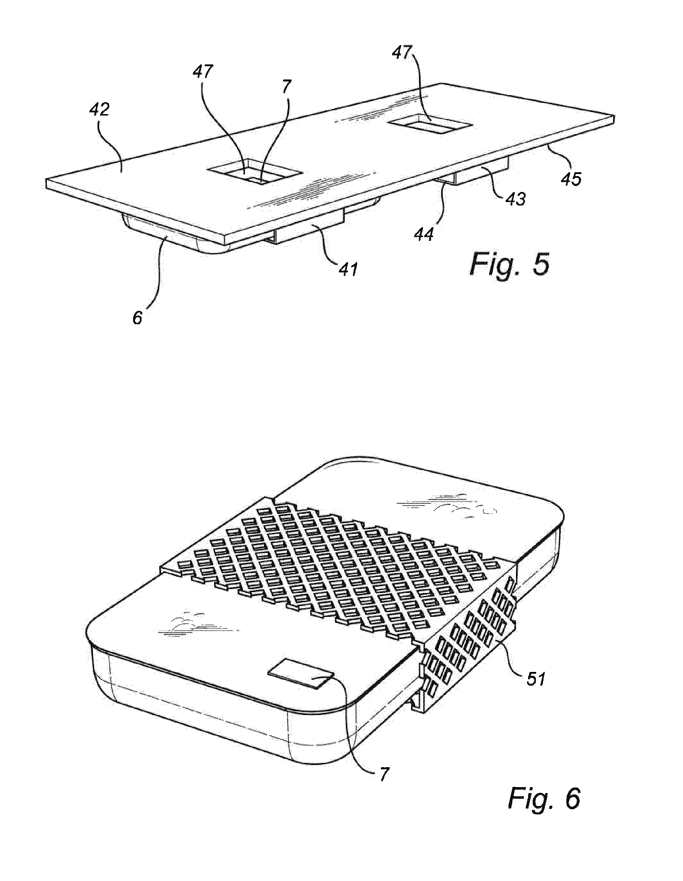

Another exemplary embodiment is illustrated in Fig. 5. In this embodiment, a deformation control device 41 in the form of a sleeve is attached at the lower side 45 of a tray 42, e.g. by welding. The bottom 44 of the deformation control device 41, the side walls 43 and the lower side 45 of the tray 42 forms the holder for a container 6 and is able to exert an external force to the container during cooking and/or pasteurization.

In this embodiment, an aperture 47 is provided in the tray 42 above each deformation control device so that the valve 7 can open.

Another alternative embodiment of a deformation control device is illustrated in Fig. 6. The embodiment of Fig. 6 has most features in common with the embodiment illustrated in Fig. 2, but instead of being made of a solid material, the deformation control device 51 in this embodiment is made of lattice. By this, the heat transfer is obstructed to a lesser degree, even if the functionality in other aspects is the same as for the previously described embodiments.

The length and width of the deformation control devices in each one of the above-described embodiments may vary. However, it is beneficial if their dimensions are chosen so that they cover as little as possible of the containers 6 in order to provide for a good heat transfer, while they at the same time should provide a force to such a large area of the containers that it prevents them from expanding when a pressure is built up inside them. In the embodiments illustrated in Fig. 1, 2 4, 5 and 6, the length x of the deformation control device is approximately 270 mm and the width y of them is approximately 150 mm. Larger and smaller deformation control devices are however conceivable, depending of the size of the food container. It is e.g. conceivable with deformation control devices of the designs in these embodiments having lengths of 130 mm or 325 mm. The widths of the deformation control unit may also vary between e.g. 100 mm and 400 mm for designs according to these embodiments. The relevant aspect is that they are large enough to limit the expansion while at the same time they should not obstruct the heat transfer more than necessary.

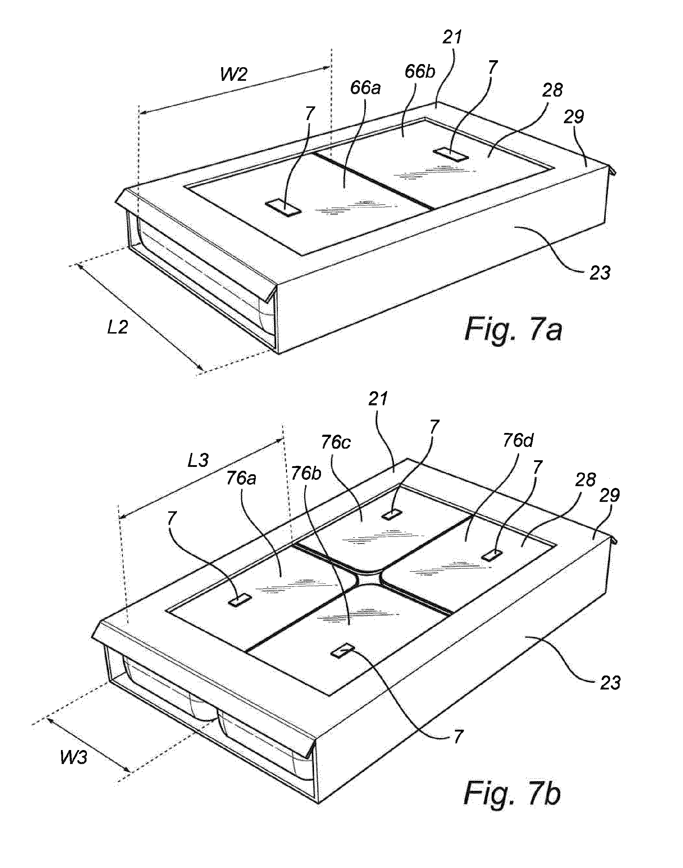

It has in the description above and drawings been illustrated that each deformation control device is configured to receive one container comprising foodstuff. That is however not necessary and it is possible to provide deformation control devices that may receive a multitude of containers. They may for example be designed to receive one or several containers of a standardized system, e.g. containers having dimensions being approximately integral multiples of other containers in the standardized system. It is in such cases beneficial to provide at least one large aperture of the roof portion of the deformation control device so that one or several valves being differently positioned do not become obstructed in their opening by the roof portion. Such an example is illustrated in Figs. 7a and 7b. In these drawings, the deformation control device 21 is the same deformation control device as illustrated in Fig. 3. In Fig. 3, the container 6 had a length L1 of approximately 325 mm and a width W1 of approximately 270 mm. In Fig. 7a it is instead two containers 66a, 66b that are positioned in the deformation control device 21. Each one of the containers 66a, 66b have a length L2 of approximately 270 mm and width W2 of approximately 160 mm. Hence, two containers 66a, 66b fit into the deformation control device 23. The valves 7 of the respective containers are positioned so that they become placed below the aperture 28 of the roof portion 29 when the two containers are placed next to each other in the deformation control device. In Fig. 7b, the same deformation control device 21 is illustrated but in this drawings, four containers 76a-d are provided inside the deformation control device. Each of the containers 76a-d has a length L3 of approximately 160 mm and width W3 of approximately 130 mm. By that, four containers may be provided within the deformation control device 21. Also in this embodiment are the valves 7 positioned below the aperture 28 so that they are not obstructed by the roof portion when they should open.

It is also conceivable with deformation control devices according to the embodiment illustrated in Fig. 3 and Figs. 7a and 7b that are larger or smaller than mentioned above. They can then beneficially be approximately integer multiples of the dimensions mentioned above.

The material of the deformation control devices in each one of the embodiments described above may also vary and the important factor is that also the material should provide for a good heat transfer. Therefore, the material of the deformation control devices of each one of the previously presented embodiments may be e.g. a microwave transparent material being plastic or inorganic or made of metal. If said deformation control device is made of plastic, it has in the illustrated embodiments a glass transition temperature being higher than 100° C and preferably higher than 120° C. Said plastic material is in these embodiments chosen from Polymethacrylate, Polymethylmethacrylate, Polystyrene, Polycarbonate, Polyurethane, Polyethylene naphtalate, ABS, HIPS, or PTFE and optionally reinforced with fibres.

Although exemplary embodiments of the present invention have been described herein, it should be apparent to those having ordinary skill in the art that a number of changes, modifications or alterations to the invention described herein may be made. Thus, the above description of the various embodiments of the present invention and the accompanying drawings are to be regarded as non-limiting examples of the invention and the scope of protection is defined by the appended claims.

Furthermore, any reference signs in the claims should not be construed as limiting the scope.

## Claims

1. A method of cooking and/or pasteurizing foodstuff in a container, the method comprising the following steps:
- providing a sealed container comprising foodstuff,
- placing said sealed container in a cooking unit,
- cooking and/or pasteurizing said foodstuff by applying heat or microwaves to said sealed container,
**characterized in that** an external force is provided to said sealed container during at least a part of the step of cooking and/or pasteurizing said foodstuff in order to limit expansion of said sealed container.

2. A method according to claim 1, wherein the external force is applied to the upper side of said container during at least a part of the time said foodstuff is being cooked and/or pasteurized.

3. A method according to any one of claims 1 or 2, wherein the external force is applied to at least four sides of said container during at least a part of the time said foodstuff is being cooked and/or pasteurized.

4. A method according to any one of claims 1 to 3, wherein said external force is applied by a deformation control device.

5. A deformation control device to be used in a method of cooking and/or pasteurizing foodstuff in a container, said deformation control device comprises two oppositely positioned walls and a roof portion, wherein said oppositely positioned outer walls and roof portion together define a space for positioning of a container comprising foodstuff.

6. A deformation control device according to claim 5, wherein the roof portion of said deformation control device is provided with at least one aperture.

7. A deformation control device according to any one of claims 5 or 6, wherein at least an edge of the roof portion of said deformation control device is bent downwards.

8. A deformation control device according to any one of claims 5 - 7, wherein the length of said deformation control device is 150 to 600 mm, more preferably 300 to 350 mm and most preferably 325 mm and the width of the deformation control device is 120 to 350 mm, more preferably 250 to 330 mm and most preferably 270 mm.

9. A deformation control device according to any one of claims 5 - 8, wherein said deformation control device is made of a metallic, inorganic or plastic material.

10. A deformation control device according to any one of claims 5 - 9 , wherein said deformation control device is made of thermoplastic material having a glass transition temperature higher than 100° C, preferably higher than 120° C.

11. A deformation control device according to claim 10, wherein said material is chosen from Polymethacrylate, Polymethylmethacrylate, Polystyrene, Polycarbonate, Polyurethane, Polyethylene naphtalate, ABS, HIPS, or PTFE.

12. A deformation control device according to any one of claims 5 - 9 , wherein said deformation control device is made of cross linked polymers having a glass transition temperature higher than 100° C, preferably higher than 120° C.

13. A deformation control device according to any one of claims 5 - 12, wherein said deformation control device is a sleeve.

14. A kit comprising a deformation control device according to anyone of claims 5 - 13 and a container for comprising foodstuff.

15. Use of a deformation control device according to any one of claims 5 - 13 in a method according to any one of claims 1 - 4.
